# NEW EUROPEAN PATENT SPECIFICATION

(11) **EP 0 291 029 B2**
(45) Date of publication and mention of the opposition decision: **27.11.1996**
(45) Mention of the grant of the patent: 23.12.1992
(21) Application number: 88107533.7
(22) Date of filing: 10.05.1988
(51) Int. Cl.: C04B 35/10, C04B 35/48, B24D 3/00, B24D 3/16, B24D 3/20

(54) **Sintered Alumina-Zirconia Ceramic Bodies and Preparation thereof**
Gesinterte keramische Aluminiumoxid-Zirkonoxid-Körper und Verfahren zur Herstellung derselben
Corps céramiques frittés d'alumine-zircone et procédé pour leur préparation

(30) Priority: 11.05.1987 US 48175; 31.03.1988 US 175802
(43) Date of publication of application: 17.11.1988
(73) Proprietor: NORTON COMPANY, Worcester Massachusetts 01606 (US)
(72) Inventor: Pellow, Scott W., Niagara Falls Ontario (CA); Trischuk, Ronald W., Niagara Falls Ontario (CA); Knapp, Christopher, Niagara Falls Ontario (CA); Bauer, Ralph, Niagara Falls Ontario (CA)
(74) Representative: DIEHL GLAESER HILTL & PARTNER

(56) References cited:
- EP-A- 0 024 099
- EP-A- 0 152 768
- US-A- 3 181 939
- US-A- 3 891 408
- US-A- 4 314 827
- US-A- 4 623 364
- US-A- 4 741 743
- Journal of material science v.17, p.240-246 (1982)
- Affidavit of D.D. Erickson (24.06.93)

## Description

This invention relates to sintered alumina-zirconia abrasives particularly useful when bonded, such as by thermoset phenolic resins, to grinding wheels.

Most ceramic bodies of alumina-zirconia are made by mixing finely ground or milled powders of alumina and zirconia, pressing to give a green body, and firing the green body to give a strong final body. Alumina from a wide variety of sources has been used. On the other hand, most manufactured alumina-zirconia abrasive grits are made by fusing zirconia and alumina together, then solidifying, often with special stratagems to produce very rapid cooling.

Starting with the introduction of sintered bauxite in 1966 (U.S. Patent 3,079,243), for use in heavy duty grinding of stainless steel, a minor but significant fraction of commercial aluminous abrasive began to be made by sintering rather than by fusion. Such sintered abrasive was used primarily for stainless steel snagging.

As of 1960, a major difference between the fused and the sintered abrasives was that the sintered abrasive grits were microcrystalline, thus of enhanced toughness and fracture resistance. Although a small amount of fused alumina known prior to 1960 was rapidly quenched to produce polycrystalline grits, the majority of the fused alumina was in the form of grits in which each grit was made up of from 1 to 3 crystals (or parts of crystals) depending upon the grit size.

In the 1960's the fused alumina-zirconia alloy abrasives were introduced (U.S. Patent 3,181,939). Such abrasives were, like the 1960 sintered abrasives, truly polycrystalline, thus having enhanced toughness and fracture resistance. Subsequently some patents were published covering sintered alumina zirconia, i.e. U.S. 3,481,723, U.S. 3,679,383 and U.S. 3,454,385.

In the early 1980's a new aluminous sintered abrasive made from alumina gel was introduced as taught in U.S. Patent 4,314,827. Such abrasive contains about 5% of magnesia which forms a polycrystalline matrix phase surrounding cellular 5 to 10 micron sized alumina crystals. Such abrasive has been employed in coated abrasive belts and discs to provide high quality perfomance. The same patent also discloses a different aluminous abrasive, made by sintering alumina gel mixed with zirconia. Such abrasive has not been offered commercially and according to the data of the patent is inferior to the MgO containing abrasive.

Recently a different sintered abrasive made from alumina gel was described in European published patent application EP-152768 and U.S. Patent 4,623,364. In these disclosures, very fine alpha alumina seed particles are added to an alpha alumina precursor gel to produce a fine and dense alpha alumina structure on sintering, without the need for MgO or other additions. The documents teach that such alumina may serve as a matrix for other ceramic material such as zirconia. Other references that are related to use of seeded gels are:
The Effect of Cr^{3⁺} and Fe^{3⁺} Ions on the Transformation of Different Aluminum Hxdroxides to (alpha)-Al₂O₃, T. Tsuchida et al., Thermochimica Acta, 64 (1983) 337-353. This article discusses the effects of additions of chromium and iron ions to boehmite, pseudo-boehmite and bayerite. The article notes on page 350 that the addition of Cr3 + ions to bayerite reduces the temperature at which the material converts to alpha alumina and explains this on the basis that the chromium ions crystallize as alpha Cr₂O₃, and acts as active nuclei for the transformation of the alumina to alpha alumina. The article further states on page 352 and 353 that the iron ions crystallize as alpha Fe₂O₃ and act as active nuclei for the transformation of the alumina to alpha alumina. The article says nothing about the crystal structure of the resulting alpha alumina. It bases its conclusion concerning nucleation on the fact that the additions of the chromium and iron ions act to reduce the temperature of transition to alpha alumina in the situations mentioned above.

Alpha Alumina Formation in Al₂O₃ Gels by F. W. Dynys and J.W. Halloran, "Proceedings of the International Conference, Ultrastructure Processing of Ceramics, Glasses and Composites" held February 11-17, 1983 in Gainesville, Fl., Chapter 11, F.W. Dynys and J.W. Halloran, J. Wiley & Sons, Inc. 1984. This article discusses the effect of additions of Cr₂O₃ and Fe₂O₃ on colloidal suspensions of pseudoboehmite. The article notes that the additions of Cr₂O₃ and Fe₂O₃ in concentrations of greater than 2 wt. % enhanced the transformation rate to alpha alumina. The article notes that during annealing of the dried gel the alpha alumina colonies which formed in the material consisted of vermicular shaped particles separated by large elongated pores. As the gels are annealed for longer times, the vermicular alpha alumina rapidly grew and dominated the microstructure. It states on page 148 that the microstructures of gels doped with MgO, Cr₂O₃, and Fe₂O₃ were indistinguishable from those of undoped gels.

Alpha Alumina Formation in Alum-Derived Gamma Alumina, by F.W. Dynys and J.W. Halloran, Journal of the American Ceramic Society, Vol. 65 No. 9, p. 442. The article describes the results of research into the formation of alpha alumina in gamma alumina during sintering. The gamma alumina powder was treated in various ways such as die pressing dry ball milling with alpha alumina milling media. The article observes on page 443 and 444 that the transformation from gamma to alpha alumina was more rapid for the gamma alumina powder which had been ball milled. To determine whether the alpha alumina milling debris acted as heterogeneous nuclei in the conversion of the gamma alumina to alpha, distilled water was milled for a period sufficient to produce an adequate amount of milling debris. The debris, which was largely alpha alumina, was collected by drying. The gamma alumina powder was doped with 1 percent of the milling debris and pressed. The weight versus time data for the doped powder was indistinguishable from that of the untreated powder which had no milling debris added, thus the article concludes that the debris had no effect on transformation and that the debris particles did not act as a seed for the crystallization of alpha alumina.

The article goes on to dicsuss on pages 446 and 447 the results of examining the annealed gamma alumina compacted powder which had been fired sufficiently to partially convert the gamma alumina to alpha. The article notes on page 447 that although the alpha particles are the same size as those in the unmilled powder the alpha colonies are much finer than those in the unmilled powder and that the nucleation frequency for the milled powder was dramatically increased by the milling operation.

The article goes on to state on the second column of page 447 that the mechanism by which the nucleation frequency is increased by ball milling is not obvious and that it had been demonstrated that the alpha alumina debris from the milling media is not responsible for the effect.

Influence of Cr and Fe on Formation of (alpha)-Al₂O₃ from (gamma)-Al₂O₃ by G.C. Bye and G.T. Simpkin. Journal of the American Ceramic Society, Vol. 57, No. 8, Pgs. 367-371, August 1974. The article reports the results of investigations into the influence of chromia and iron on the formation of alpha alumina. It notes on page 368 that the presence of Fe^{3⁺} ions in the gamma alumina accelerated the conversion to alpha alumina. On page 370, column 2 the article suggests that this is the case because the Fe^{3⁺} ion acts to decrease the crystallinity of the intermediate delta-Al₂O₃ and possibly by the segregation of nuclei of alpha-Fe₂O₃ but notes that the alpha-Fe₂O₃ was not detected by X-ray diffraction. The article goes on to say that the formation of alpha-Al₂O₃ involves either, (a) steps of sintering followed by synchro-shear, or, (b) a process of nucleation and growth, and states that the evidence supports the synchro-shear mechanism.

U.S. Patent No. 3,387,957, issued June 11, 1968 to E.E. Howard describes a method for making alpha alumina abrasive grain by sintering calcined bauxite. The calcined bauxite is initially about 3/4 inch (1,9 cm) and finer in size and is milled in either a ball mill with alumina balls or a laboratory mill using either steel or alumina grinding media, to form a slurry. The slurry is dried to a cake and pulverized into agglomerates of finely ground microscopic particles. The pulverized material is then thoroughly mixed with a binder and extruded to produce solid cylindrical rods that are cut into grain sized pieces, dried and fired. Microscopic analysis of several grains showed that hey were made up of microcrystalline particles on the order of five microns in size. The patent notes in the example described in column 6 that the calcined bauxite was milled for 100 hours in a rotary ball mill using cylindrical alumina balls and that the chemical composition of the material was changed somewhat as a result of the attrition of the alumina grinding media and the lining of the mill. The patent goes on to state that the composition following the milling was not significantly changed.

Since calcined bauxite is normally already alpha alumina, the sintering of the milled material described in the Howard patent does not convert a precursor alumina to alpha alumina but merely consolidates already existing alpha alumina. Additionally the slurry formed by the milling described in the Howard patent is not a gel and the patent does not describe any sol gel process. There is no suggestion in the patent that the attrition of alpha alumina from the milling media played any tole in the process of making the abrasive grain. The patent states in passing at column 2, line 63-66, that calcined bauxite is the preferred aluminous mineral source material although uncalcined or raw bauxite ore may also be used. The patent does not describe how uncalcined bauxite would be used in the process and whether or not any preliminary calcining step would be required.. The method claims of the patent are limited to the use of calcined bauxite.

While, as indicated above, various alumina-zirconia sintered abrasives have been described in the patent literature, none have to date been described or produced which are superior to their fused counterparts in overall perfomance in the snagging of both stainless and carbon alloy steels. Fused alumina-zirconia abrasives generally have an average crystal size of less than 0.2 microns for both the alumina and the zirconia crystals of which they are composed.

### BRIEF DESCRIPTION OF THE DRAWING

Figure 1 shows a bar graph of comparative grinding results on stainless steel and on carbon alloy steel of two examples of the abrasive grain of this invention, prior art sintered bauxite, and prior art cofused alumina-zirconia.

Figure 2 comprises electron micrographs of cross-sections of product made according to the invention.

It has been found that high quality alumina-zirconia ceramic abrasive grits can be made by mixing zirconia powder with hydrated alumina, crystalline seeds capable of facilitating the conversion of the hydrated alumina to crystalline alpha alumina upon firing, and water to form a sol, gelling the sol, shaping the gel into a green body, and heating the green body sufficiently to convert the hydrated alumina content of the green body to alpha alumina crystals.

In accordance with the present invention there is provided an abrasive grit as per claim 1.

It has been found that polycrystalline abrasive grits, preferably comprising from 70 to 85 weight percent of alpha alumina and from 30 to 15 weight percent of zirconia, both in crystals of which at least three-fourths appear to have a maximum dimension, preferably between 0.3 and 1 micron, when viewed in cross section in an electron micrograph at a magnification of about 10,000 - 20,000 X, with at least one half of the zirconia contained in the grit having the tetragonal crystal form and with the zirconia and alumina crystals well intermixed, show superior performance to previously known alumina zir- conia abrasive grits in certain heavy duty grinding applications, commonly designated as "snagging", on both stainless and carbon alloy steels.

Such abrasive grits and other useful abrasive grits, may be produced by sintering pressed (as by extrusion) mixtures of seeded alumina gel and fused quenched zirconia powders. The zirconia may be a combination of the tetragonal crystal structure, stabilized by the addition of yttria or rare earth metal oxides, and the unstabilized monoclinic crystal form, or it may be 100% stabilized.

The abrasive as fired preferably should contain from 15 to 30% of zirconia, including the stabilizing yttria or cerium oxide. Minor impurities may be present in the alumina feed, the zirconia feed, and the stabilizer. Cerium oxide ore, commercially available, contains a high percentage of rare earth oxides some or all of which are effective stabilizers for the tetragonal form of zirconia at room temperature.

The stabilized zirconia is preferably produced by the air quenching of molten zirconia containing an oxide capable of stabilizing the solidified room temperature zirconia in the tetragonal crystal structure. The air aspirating nozzle of U.S. Patent 3,831,857 is suitable for the air quenching of the zirconia. The molten zirconia is aspirated from a refractory nozzle, by air, into small spheres.

For use in this invention quenched spheres of zirconia stabilized with 4% yttria, and unstabilized commercially available zirconia, "ZIRCOA-A", from Zircoa Co. are suitable.

The zirconia spheres are ground to a powder (less than 5 microns in size) and mixed with an alumina monohydrate sol. The sol may be formed by any of the means well known in the art, such as hydrolysis of aluminum alkoxides, but usually it is most conveniently provided by purchasing commercially available sols or by dispersing commercially available powders of alumina monohydrate, with the latter usually being preferred because it is cheaper.

Alpha alumina itself and alpha ferric oxide are known to be adequate seeds for use in this invention, with alpha alumina generally preferred. In general, the smallest practically possible seeds are preferred, but there is a theoretical lower limit, because extremely small crystals become unstable and might dissolve before they could function as seeds. In practice, seeds sufficiently small to have a specific surface area (hereinafter SSA) measured by convention gas adsorption techniques, making use of the BET equation, of at least 39 M²/G are preferred, and seeds with an SSA of as much as 100 m²/g have been used and are still more preferred.

The seeds may be provided by any convenient technique, as described in more detail in U.S. Patent 4,623,364, with the most preferred source being milling with milling media containing about 88% alpha alumina in a Sweco vibratory mill. Suitable media, in the form of cylinders with both diameter and height of about 13 mm, can be purchased from Diamonite Products, Shreve, Ohio, and a model numbers 45, 80, and 18 Sweco mills are all suitable. Milling, with the mill filled initially with only the media and water, produces, after about 24-90 hours, a suspension of mostly very fine alpha alumina crystallites in water. Any undesirable large crystallites that might be produced can be removed from the suspension by appropriate filtration, centrifugation, etc. Direct addition of an aqueous suspension prepared in this way and concentrated to about 5% alumina to a mill in which the other constituents of a sol for use according to this invention are being milled as a slurry in water is generally highly effective for dispersing the seeds substantially uniformly throughout the sol, as is preferred for achieving the most uniform properties in products according to this invention.

The best properties are generally achieved when the aggregated weight of seeds in the gel is at least 1% of the weight of the Al₂O₃ in alumina monohydrate when the seeds have a SSA of about 100 m²/g. In general, the seeds should not form more than 10% of the weight of Al₂O₃ content in the final gel, and amounts from 0.6-5% of the weight of the gel are generally preferred, when using the preferred finest seeds currently known to the applicants, having an SSA of about 100 m²/g. After extrusion into 2 to 10 mm diameter rods, the product is dried, crushed to short lengths, and fired. Firing at 1475 °C for 1/2 hour was employed in making the test abrasive referred to below. Lower or higher temperatures and more or less time may be employed. The firing should be sufficient to form a strong body, but not so long as to produce growth of the alpha alumina above 4 microns in size. A size of 3 microns and finer for the alpha alumina crystals in the fired product is preferred. The crushed extrudate may be sized by screening before and after firing.

At least 50% of the zirconia should be stabilized in the tetragonal form for the best snagging abrasives. Up to 50% monoclinic zirconia may be present. Good results can be achieved with weight ratios of 5/1 to 1/1. The zirconia may be all 100% stabilized for superior performance on carbon alloy steel but reduced effectiveness on stainless steel, compared to the 5/1 to 1/1 combination.

The practice of the invention may be further appreciated from the following non-limiting working examples.

### Example I

Stabilized zirconia for use in this example was prepared as described in U.S. Patent 4,565,792 of January 21, 1986 to Knapp, with 3.9 - 4.1 weight percent of yttria added to the zirconia (containing its natural amount of hafnia, about 2%). Before mixing, the stabilized zirconia spheres produced were ground to a particle size of 95% less than 2.0 microns as measured by a Coulter Counter. The unstabilized zirconia was commercially available Zircoa-A, available from Zircoa Company. Before mixing, this product was ground to the same specification as used for the stabilized zirconia.

0.68 kg of stabilized zirconia powder and 0.23 kg of unstabilized zirconia powder were mixed with 5.2 kg of Condea NG powder, a fine spray dried alumina monohydrate powder all capable of passing through a 325 mesh screen, and dry mixed for at least five minutes in a V-blender with a capacity of about 16 liters. A volume of 725 ml of water containing 5% by weight of alpha alumina seeds having an SSA of about 100 m²/g, prepared by milling distilled water in a Model 45 Sweco mill with Diamonite 88% cylindrical alumina media with both diameter and height of about 13 mm each, was added to the mixed powders in the V-blended and mixed with them. Three additions of about 600 ml each of distilled water were then made to the mix, with 1-2 minutes of mixing after each addition and before the next one. These operations produced an alumina monohydrate sol with fine alpha alumina seeds and equal amounts of stabilized and unstabilized zirconia powders evenly dispersed therethrough.

The seeded sol was then gelled by addition of a mixture of 400 ml of concentrated nitric acid with 1800 ml of water. This mixture was added in four equal portions, with mixing for a minute or two after addition of each portion and before the next one was added. (During these additions, additional water could also be added if needed for proper viscosity. Alternatively, less water could be used to make the sol if the specific characteristics of particular lots of powder resulted in a sol with a lower viscosity than desirable when using the exact quantities specified here.) The product, after the final addition and mixing of the gelling acid, was emptied from the V-Blender as gelled pellets 2-10 mm in diameter. These pellets were then fed to a conventional piston extruder (alternatively, an auger extruder could equally well be used) and extruded as short rods about 2.4 mm in diameter, dried for about 24 hours at 90°C, and broken into short lengths having an aspect ratio between 1 and 10. The drying reduced the diameter of the rods to about 1.6 mm. The broken lengths of extruded gel were then heated in a rotating Harper kiln at 1475°C for thirty minutes to convert the balance of the alumina in the gel to finely crystalline alpha alumina.

The heated short lengths of material were graded in the conventional manner for abrasive grits and the fraction classified as grit 16, with an average size of about 1.2 mm, was used to make grinding wheels, employing a conventional phenolic resin bond with active fillers designed to be useful in high speed grinding of both stainless steel and carbon alloy steels. The wheels were 40.6 cm in diameter and 5 cm thick. Grinding with these wheels was performed at 2380 revolutions per minute, with the vertical force adjusted to keep the power level at 26 kilowatts. The results are shown in the drawing under the designation "EXP 1".

### Example II

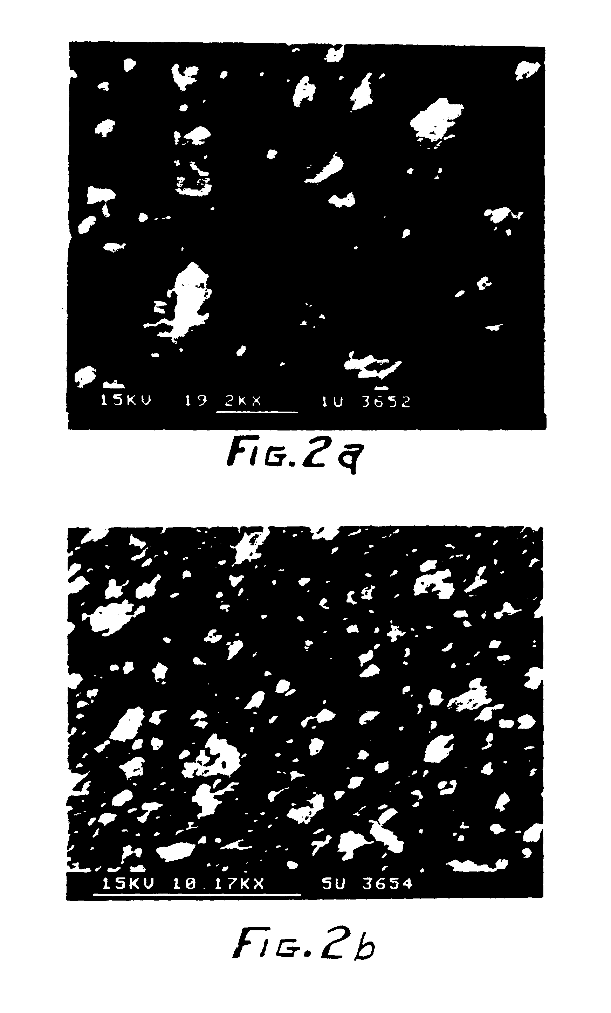

This was performed in the same way as Example I, except that 0.455 kg of each of stabilized and unstabilized zirconia powder was used instead of the amounts specified in Example I. Grinding performance of wheels made from the product according to this example is shown in Figure 1 under the designation "EXP 2".

### Example III

This was performed in the same way as Example I, except that 0.91 kg of stabilized and no unstabilized zirconia powder was used instead of the amounts specified in Example I. The performance of the grinding wheel made in this example was even better than from Example II on carbon steel, but it was substantially poorer on stainless steel.

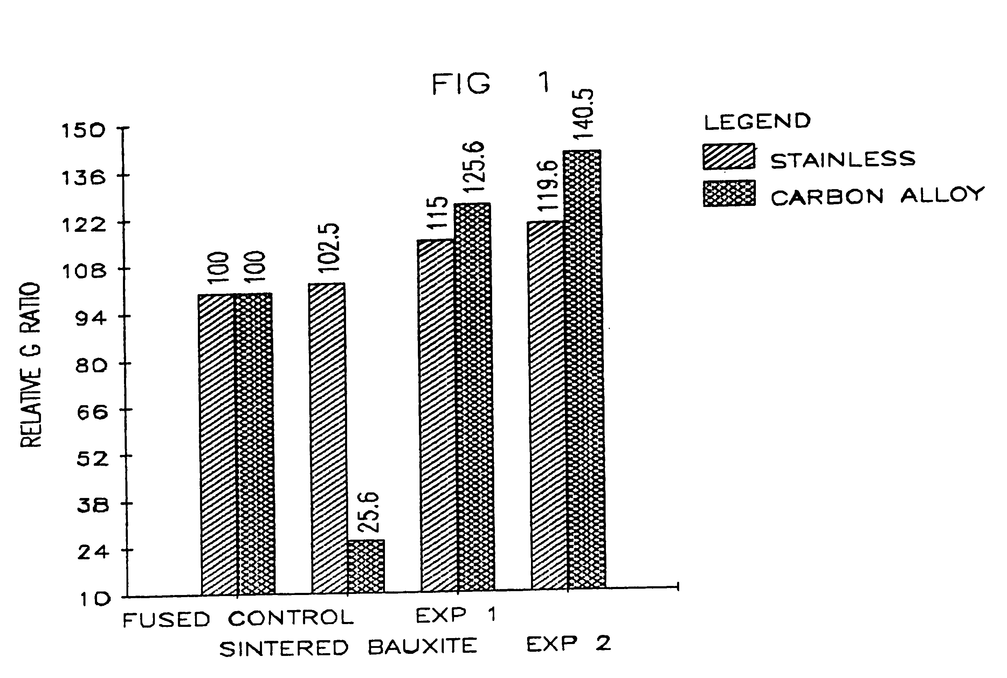

Figure 2 shows two electron micrographs, on different scales, of cross sections of the product from Example III. Figure 2 (a) is at 19,200 X and 2 (b) is at 10,180 X. The darker microcrystals in these pictures are alumina and the lighter ones zirconia. Comparison of the dimentions of the individual mocrocrystals shown with the scale of the pictures shows that almost all the microcrystals shown, certainly more than three-fourths of them, have maximum dimensions between 0.25 and 1 micron, as claimed for this invention.

The average size of the microcrystals has been estimated by drawing diagonal lines across a copy of each of the pictures in Figure 2, measuring the number of crystal boundaries that fall on the line, and dividing this number into the equivalent length of the diagonal line after correcting for the scale of magnification. The line from upper right to lower left in Figure 2 (a) indicates an average grain size on 0.30 microns by this method, while the line from upper left to lower right in the same picture indicates 0.32 microns. In Figure 2 (b) the corresponding values are 0.25 and 0.40 microns, respectively. Thus the overall average grain size is 0.32 microns, well under the value of 0.5 microns which is preferred.

### Examples IV-VIII

These examples were perfomed in the same general way as Examples I-III, except that (i) no grinding wheels were made; instead ceramic fiber bodies with a diameter of 0.6 mm were prepared; (ii) the relative amounts of zirconia and alumina were varied, instead of the relative amounts of monoclinic and tetragonal zirconia; only powder of predominantly tetragonal zirconia was used in these experiments. The relative proportions between alpha alumina seed materials and hydrated alumina as used in Examples I-III were maintained for Examples IV-VIII, with the amounts of water and acid for gelling varied as needed to achieve an appropriate gel viscosity for the amount of zirconia powder added to the sols. The details of composition and some physical properties of the products are shown in Table 1 below.

The extruded green bodies, after being dried were fired for thirty minutes at the temperature shown in the Table. The three point bend strengths shown in the Table were determined by standard methods for rods adjusted to the small diameter samples used. The hardness and fracture toughness values were determined by examining the process of diamond indentation of polished cross sections of the bodies.

**Table I**

| Physical Properties of Some products of the Invention | | | | | |
|---|---|---|---|---|---|
| Example Number | Weight % Zirconia | Firing Temperature, °C | Three Point Bending Strength, GPa | Hardness, GPa | Fracture Tougness MPa m^{0,5} |
| IV | 5 | 1450 | 0.97 | 20.0 | 4.4 |
| V | 20 | 1500 | 0.91 | 18.4 | 4.4 |
| VI | 35 | 1550 | 1.26 | 18.8 | 5.9 |
| VII | 40 | 1550 | 1.41 | 18.0 | 5.7 |
| VIII | 50 | 1550 | 1.06 | 17.8 | 5.5 |

The results in Table 1 generally indicate that strength increases with increasing zirconia content, at least up to 40%. Hardness decreases with increasing zirconia content, but fracture toughness goes up with more than about 30% zirconia. Optical microscopy on these materials showed the zinconia microcrysals were well intermixed with the alumina ones and that the average grain size was 0.76 microns for Example IV, 0.58 microns for Example VII, and 0.50 for Example VIII.

## Claims

1. An abrasive grit comprising well intermixed microcrystals of alpha alumina and zirconia and containing from 50 to 95 weight percent of alumina and from 50 to 5 weight percent of zirconia, characterized in that at least three-fourths of said microcrystals appear to have a maximum dimension between 0.25 and 1 micron when viewed in cross section in an electron micrograph at a magnification of about 10,000 - 20,000 X, and wherein at least one-half of the zirconia contained in the grit has the tetragonal crystal form and is stabilized by the addition of yttria or a rare earth metal oxide, and that the grits are obtainable by gelling a sol seeded by a sufficient amount of crystalline seeds to facilitate the transformation of hydrated alumina to crystalline alpha alumina and to which sol powdered zirconia, at least half of which is stabilized in the tetragonal crystal form by the addition of yttria or a rare eath metal oxide, has been admixed.

2. An abrasive grit according to claim 1, wherein said microcrystals have an average size of less than 0.5 microns.

3. An abrasive grit according to claim 1 or 2, having a three point bend strength of at least 0.9 gigapascals.

4. An abrasive grit according to any one of claims 1-3, having a hardness of at least 17 gigapascals.

5. An abrasive grit according to any one of claims 1-4, having a fracture toughness of at least 4 megapascal (meters)^{0.5}.

6. An abrasive grit according to any one of claims 1-5, containing from 70 - 85% alumina and from 30 - 15% zirconia.

7. A polycrystalline sintered abrasive grit according to any one of claims 1-6, containing from 70 to 85 weight per cent of alumina and from 30 to 15 weight percent of zirconia in the form of distinct zirconia and alumina crystals well intermixed.

8. An abrasive grit according to any one of claims 1-7, wherein at least one-fifth of the zirconia contained in the grit has the monoclinic crystal form.

9. A grinding wheel comprising abrasive grits according to any one of claims 1-8.

10. A grinding wheel according to claim 9, wherein said abrasive grits are bonded by a thermoset phenolic resin.

11. A process for making an abrasive grit according to claim 1, comprising the steps of:
(a) mixing together to form a sol powdered zirconia, hydrated alumina, and water;
(b) treating the sol formed in part (a) to produce a gel;
(c) shaping the gel formed in part (b) into coherent bodies; and
(d) heating the coherent bodies from step (c) sufficiently to convert the hydrated alumina content of the bodies to alpha alumina crystals, characterized in that the mixture formed in part (a) also contains a sufficient amount of fine crystalline seeds to facilitate the transformation of hydrated alumina to crystalline alpha alumina upon heating and in that at least half of the zirconia in the mixture formed in part (a) is stabilized in the tetragonal crystal form by the presence of another oxide.

12. A process according to claim 11, wherein said fine crystalline seeds aggregate to at least 0.6 weight percent of the alumina content of the hydrated alumina present in the seeded sol.

13. A process according to claim 11 or 12, wherein said fine crystalline seeds have a specific surface area of at least 60 square meters per gram.

14. A process according to any one of claims 11-13, wherein said fine crystalline seeds are alpha alumina.

15. A process according to any one of claims 11-14, wherein at least one fifth of said powdered zirconia is in the monoclinic crystal form.

16. A process according to any one of claims 11-15, in which said hydrated alumina is alumina monohydrate.

17. A process according to any one of claims 11-16, in which said amount of fine crystalline seeds is not more than 10 weight percent of the equivalent alumina in the hydrated alumina content of said sol.

## Patentansprüche

1. Schleifsand, umfassend miteinander gut vermischte Mikrokristalle von α-Aluminiumoxid und Zirkoniumoxid und enthaltend 50 bis 95 Gew.% Aluminiumoxid und 50 bis 5 Gew.% Zirkoniumoxid, dadurch gekennzeichnet, daß zumindest drei Viertel der Mikrokristalle eine maximale Abmessung zwischen 0,25 und 1 µm zu besitzen scheinen, wenn sie in einer elektronenmikroskopischen Aufnahme bei einer Vergrößerung von etwa 10000 bis 20000 X im Querschnitt betrachtet werden, und worin zumindest die Hälfte des in dem Sand enthaltenen Zirkoniumoxids die tetragonale Kristallform aufweist und durch Zugabe von Yttriumoxid oder einem Oxid eines Seltenen Erden-Metalls stabilisiert ist, und daß der Sand durch Gelierung eines Sols erhältlich ist, welches durch eine ausreichende Menge an kristallinen Keimen angeimpft ist, um die Umwandlung des hydratisierten Aluminiumoxids in kristallines α-Aluminiumoxid zu erleichtern, und wobei dem Sol pulverisiertes Zirkoniumoxid beigemischt wurde, von dem mindestens die Hälfte durch die Zugabe von Yttriumoxid oder einem Oxid eines Seltenen Erden-Metalls in der tetragonalen Kristallform stabilisiert ist.

2. Schleifsand gemäß Anspruch 1, worin die Mikrokristalle eine durchschnittliche Größe von geringer als 0,5 µm besitzen.

3. Schleifsand gemäß Anspruch 1 oder 2 mit einer Drei-Punkte-Biegefestigkeit von zumindest 0,9 Gigapascal.

4. Schleifsand gemäß einem der Ansprüche 1 bis 3 mit einer Härte von zumindest 17 Gigapascal.

5. Schleifsand gemäß einem der Ansprüche 1 bis 4 mit einer Bruchfestigkeit von zumindest 4 Megapascal (Meter)^{0,5}.

6. Schleifsand gemäß einem der Ansprüche 1 bis 5, enthaltend 70 bis 85% Aluminiumoxid und 30 bis 15% Zirkoniumoxid.

7. Polykristalliner, gesinterter Schleifsand gemäß einem der Ansprüche 1 bis 6, enthaltend 70 bis 85 Gew.% Aluminiumoxid und 30 bis 15 Gew.% Zirkoniumoxid in Form von gut untereinander vermischten, getrennten Zirkoniumoxid- und Aluminiumoxid-Kristallen.

8. Schleifsand gemäß einem der Ansprüche 1 bis 7, worin zumindest ein Fünftel des in dem Sand enthaltenen Zirkoniumoxids die monokline Kristallform besitzt.

9. Schleifscheibe, enthaltend Schleifsand gemäß einem der Ansprüche 1 bis 8.

10. Schleifscheibe gemäß Anspruch 9, worin der Schleifsand durch ein wärmehärtendes Phenolharz gebunden ist.

11. Verfahren zur Herstellung von Schleifsand gemäß Anspruch 1, umfassend die folgenden Stufen:
(a) das Vermischen von pulverisiertem Zirkoniumoxid, hydratisiertem Aluminiumoxid und Wasser miteinander zur Bildung eines Sols;
(b) die Behandlung des in Teil (a) gebildeten Sols zur Herstellung eines Gels;
(c) die Formung des in Teil (b) gebildeten Gels in kohärente Körper; und
(d) das ausreichende Erhitzen der kohärenten Körper aus Stufe (c), um den Gehalt an hydratisiertem Aluminiumoxid der Körper in α-Aluminiumoxid-Kristalle umzuwandeln, dadurch gekennzeichnet, daß die in Teil (a) gebildete Mischung auch eine ausreichende Menge an feinen, kristallinen Keimen enthält, um die Umwandlung des hydratisierten Aluminiumoxids in kristallines α-Aluminiumoxid nach Erhitzen zu erleichtern, und daß zumindest die Hälfte des Zirkoniumoxids in der in Teil (a) gebildeten Mischung durch die Anwesenheit eines anderen Oxids in der tetragonalen Kristallform stabilisiert wird.

12. Verfahren gemäß Anspruch 11, worin die feinen, kristallinen Keime zu zumindest 0,6 Gew.% des Aluminiumoxidgehalts des in dem angeimpften Sol vorhandenen, hydratisierten Aluminiumoxids aggregieren.

13. Verfahren gemäß Anspruch 11 oder 12, worin die feinen, kristallinen Keime eine spezifische Oberfläche von zumindest 60 m²/g aufweisen.

14. Verfahren gemäß einem der Ansprüche 11 - 13, worin die feinen, kristallinen Keime α-Aluminiumoxid sind.

15. Verfahren gemäß einem der Ansprüche 11 bis 14, worin zumindest ein Fünftel des pulverisierten Zirkoniumoxids in der monoklinen Kristallform vorliegt.

16. Verfahren gemäß einem der Ansprüche 11 bis 15, worin das hydratisierte Aluminiumoxid Aluminiumoxidmonohydrat ist.

17. Verfahren gemäß einem der Ansprüche 11 bis 16, worin die Menge der feinen, kristallinen Keime nicht mehr als 10 Gew.% des äquivalenten Aluminiumoxids in dem hydratisierten Aluminiumoxidgehalt des Sols beträgt.

## Revendications

1. Grain abrasif comportant des microcristaux bien mélangés entre eux d'alumine alpha et de zircone, et renfermant de 50 à 95 % en poids d'alumine et de 50 à 5 % en poids de zircone,
caractérise en ce qu'au moins les trois quarts desdits microcristaux semblent présenter une dimension maximale comprise entre 0,25 et 1 micron lorsqu'ils sont examinés en section transversale sur une micrographie électronique, sous un grossissement d'environ 10 000 à 20 000 X, et dans lequel au moins la moitié de la zircone contenue dans le grain présente une forme cristalline tétragonale et est stabilisée par l'addition d'oxyde d'yttrium ou d'un oxyde d'un métal de terre rare,
et en ce que les grains peuvent être obtenus par gélification d'un sol, ensemencé par une quantité suffisante de germes cristallins qui facilitent la transformation d'alumine hydratée en alumine alpha cristalline, auquel sol de la zircone pulvérulente a été mélangée, au moins la moitié de la zircone étant stabilisée sous la forme de cristaux tétragonaux par l'addition d'oxyde d'yttrium ou d'un oxyde métallique de terre rare.

2. Grain abrasif selon la revendication 1, dans lequel lesdits microcristaux ont une taille moyenne inférieure à 0,5 micron.

3. Grain abrasif selon la revendication 1 ou 2, présentant une résistance à la flexion en trois points d'au moins 0,9 gigapascal.

4. Grain abrasif selon l'une quelconque des revendications 1 à 3, présentant une dureté d'au moins 17 gigapascals.

5. Grain abrasif selon l'une quelconque des revendications 1 à 4, présentant une ténacité à la rupture d'au moins 4 mégapascals (mètres)^{0,5}.

6. Grain abrasif selon l'une quelconque des revendications 1 à 5, renfermant de 70 à 85 % d'alumine et de 30 à 15 % de zircone.

7. Grain abrasif polycristallin fritté selon l'une quelconque des revendications 1 à 6, renfermant de 70 à 85 % en poids d'alumine et de 30 à 15 % en poids de zircone sous la forme de cristaux de zircone et d'alumine distincts, bien mélangés les uns aux autres.

8. Grain abrasif selon l'une quelconque des revendications 1 à 7, dans lequel au moins un cinquième de la zircone que renferme le grain présente une forme cristalline monoclinique.

9. Meule comportant des grains abrasifs selon l'une quelconque des revendications 1 à 8.

10. Meule selon la revendication 9, dans laquelle lesdits grains abrasifs sont liés par une résine phénolique thermodurcie.

11. Procédé de fabrication d'un grain abrasif selon la revendication 1, comportant les étapes consistant à :
a) mélanger ensemble, pour former un sol, de la zircone pulvérulente, de l'alumine hydratée et de l'eau ;
b) traiter le sol formé dans l'étape (a) pour produire un gel ;
c) mettre en forme le gel obtenu dans l'étape (b) pour obtenir des corps cohérents ; et
d) chauffer les corps cohérents résultant de l'étape (c) dans une mesure suffisante pour convertir, en cristaux d'alumine alpha, l'alumine hydratée contenue dans lesdits corps,
caractérisé en ce que le mélange formé dans l'étape (a) renferme en outre une quantité suffisante de germes cristallins fins, afin de faciliter la transformation de l'alumine hydratée en alumine alpha cristalline par chauffage, et en ce qu'au moins la moitié de la zircone contenue dans le mélange formé dans l'étape (a) est stabilisée sous forme cristalline tétragonale par la présence d'un autre oxyde.

12. Procédé selon la revendication 11, dans lequel lesdits germes cristallins fins viennent s'aggréger à au moins 0,6 % en poids de la teneur en alumine de l'alumine hydratée présente dans le sol ensemencé.

13. Procédé selon la revendication 11 ou 12, dans lequel lesdits germes cristallins fins ont une surface spécifique d'au moins 60 m²/g.

14. Procédé selon l'une quelconque des revendications 11 à 13, dans lequel lesdits germes cristallins fins sont de l'alumine alpha.

15. Procédé selon l'une quelconque des revendications 11 à 14, dans lequel au moins un cinquième de ladite zircone pulvérulente est sous forme cristalline monoclinique.

16. Procédé selon l'une quelconque des revendications 11 à 15, dans lequel ladite alumine hydratée est de l'alumine monohydratée.

17. Procédé selon l'une quelconque des revendications 11 à 16, dans lequel ladite quantité de germes cristallins fins dans l'alumine hydratée contenue dans ledit sol n'est pas supérieure à 10 % en poids de l'alumine équivalente.
